# EUROPÄISCHE PATENTSCHRIFT

(11) **EP 0 826 261 B1**
(45) Veröffentlichungstag und Bekanntmachung des Hinweises auf die Patenterteilung: **24.11.1999**
(21) Anmeldenummer: 96914065.6
(22) Anmeldetag: 06.05.1996
(51) Int. Cl.: H02K 3/50

(54) **DYNAMOELEKTRISCHE MASCHINE MIT BEWICKELTEM ROTOR**
DYNAMO-ELECTRIC MACHINE WITH WOUND ROTOR
MACHINE DYNAMO-ELECTRIQUE A ROTOR BOBINE

(30) Priorität: 16.05.1995 DE 19519127
(43) Veröffentlichungstag der Anmeldung: 04.03.1998
(73) Patentinhaber: SIEMENS AKTIENGESELLSCHAFT, 80333 München (DE)
(72) Erfinder: SCHMIDT, Ingolf, D-13629 Berlin (DE)
(86) Internationale Anmeldenummer: DE9600814
(87) Internationale Veröffentlichungsnummer: WO9637030

(56) Entgegenhaltungen:
- DE-C- 701 612
- US-A- 4 782 579

## Beschreibung

Die Erfindung liegt auf dem Gebiet der dynamoelektrischen Maschinen und befaßt sich mit der konstruktiven Ausgestaltung einer Stützeinrichtung, mit der die Wickelköpfe eines mit Wicklungen versehenen Rotors gegen Fliehkräfte gesichert sind.

Zur Befestigung der Spulenköpfe von Rotorwicklungen ist es u.a. üblich, die Spulenköpfe innen durch einen ringartigen Wicklungsträger abzustützen und die Spulenköpfe auf diesem Wicklungsträger mit Hilfe von Bandagen zu fixieren. Insbesondere bei größeren Maschinen kann anstelle einer Bandage auch ein mehrfach geteilter Ring verwendet werden, der mit Isolierzwischenlagen an den Wickelköpfen anliegt und mit Hilfe von Schrauben am Wicklungsträger fixiert wird. Bei besonders großen Fliehkräften können auch Kappen über die Spulenköpfe geschoben werden. Derartige Kappen sind insbesondere zur Fixierung der Wickelköpfe des Rotors von Turbogeneratoren üblich (Buch "Leitfaden der Elektrotechnik" -Band 3-"Konstruktions- und Festigkeitsberechnungen elektrischer Maschinen", Verfasser: Dr. C.von Dobbeler, 1962, B.G. Teubner Verlagsgesellschaft Stuttgart, Seiten 25 bis 29 und 58 bis 62; DE-B 26 29 574). Es ist weiterhin bekannt, die von der umlaufenden Erregerspule einer Synchronmaschine ausgehenden Fliehkräfte mit Hilfe von an der äußeren Stirnseite der Erregerspule anliegenden Haltebrücken aufzunehmen, die ihrerseits durch am Laufkörper der Maschine befestigte, auf Zug beanspruchte Bolzen gehalten werden (DE-A-950 659).

Die Aufgabe der Fixierung von Wickelköpfen eines Rotors stellt sich in besonder Weise bei läufergespeisten Schleifringlaufermaschinen, wie sie neuerdings für drehzahlregelbare Wasserkraft-Motor-Generatoren für Pumpspeicherbetrieb zum Einsatz kommen. Für derartige Generator-Motoren ist u.a. charakteristisch, daß der Rotor einen Durchmesser von 3 bis 7 m aufweisen kann. Zur Fixierung der Wickelköpfe eines solchen Rotors ist es bekannt, am Rotorkörper über Stützböcke Halteringe anzuordnen, in denen die Enden von U-förmigen Zugbolzen fixiert sind. Je ein Zugbolzen übergreift dabei mit seinem Uförmigen Bereich einen Wicklungskopf (Bericht 11-104 "Development and achieved commercial operation ... for a pumped storage power plant" der CIGRE-Tagung 1992, 30. August bis 5. September). Eine derartige Wickelkopfbefestigung ist konstruktiv und montagetechnisch sehr aufwendig.

Ausgehend von einer dynamoelektrischen Maschine mit den Merkmalen des Oberbegriffes des Patentanspruches liegt der Erfindung die Aufgabe zugrunde, die Wickelkopfbefestigung konstruktiv und montagetechnisch zu vereinfachen.

Zur Lösung dieser Aufgabe ist gemäß der Erfindung vorgesehen, daß der innere Haltering der Stützeinrichtung aus einem Blechpaket besteht, das auf der axial verlängerten Nabe des Rotors in gleicher Weise wie das Rotorblechpaket aufliegt und das mit am Umfang gleichmäßig verteilt angeordneten, axial verlaufenden Profilnuten versehen ist, in die Profilleisten zur Befesstigung der Zugbolzen eingeschoben sind.

Bei einer derartigen Ausgestaltung der Stützeinrichtung besteht also der innere Haltering in gleicher Weise wie der elektrisch aktive Rotorkörper aus Blechen, die zusammen mit den Blechen des Rotors auf der Nabe des Rotors angeordnet und befestigt werden können. Als eigentlicher Stützkörper wird dabei ein aus mehreren biegesteifen, plattenartigen Ringabschnitten bestehender Ring verwendet, der mit Hilfe von Zugbolzen an dem aus Blechen aufgebauten inneren Haltering befestigt ist. Hierzu sind im Blechpaket formschlüssig verankerte Leisten vorgesehen, in die die Zugbolzen eingeschraubt werden. - Eine gemäß der Erfindung ausgebildete Stützeinrichtung besteht somit einschließlich des inneren Halteringes aus einer Vielzahl von Einzelteilen, die am Montageort in einfacher Weise zur Stützeinrichtung zusammengefügt werden.

Ein Ausführungsbeispiel einer gemäß der Erfindung ausgebildeten Stützeinrichtung ist in den Figuren 1 bis 3 dargestellt. Dabei zeigt
- Figur 1: den prinzipiellen Aufbau der Vorrichtung und die
- Figuren 2 und 3: konstruktive Details.

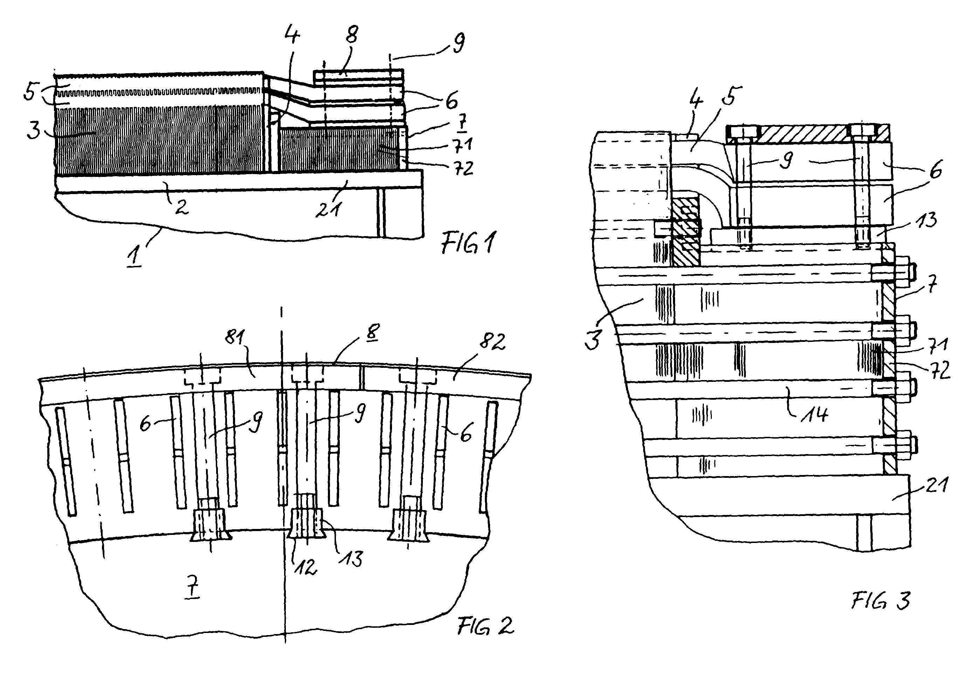

Figur 1 zeigt in schematischer Darstellung den Ausschnitt eines Rotors 1 einer dynamoelektrischen Maschine, der einen Außendurchmesser von etwa 6 m aufweist. Auf der Nabe 2 ist das Rotorblechpaket 3 angeordnet und stirnseitig mittels der Druckplatte 4 axial verspannt. In die Nuten der Rotorbleche sind Wicklungen 5 eingelegt, die axial mit den Wickelköpfen 6 aus dem Rotorblechpaket 3 hervorragen. Zur Abstützung der Wickelköpfe 6 ist die Nabe 2 um einen Abschnitt 21 axial verlängert, wobei auf diesem Abschnitt ein aus Blechen 71 und der Druckplatte 72 aufgebautes Blechpaket angeordnet ist, das einen unter den Wickelköpfen 6 angeordneten Haltering 7 bildet. Die Wickelköpfe sind weiterhin von einem ringförmigen Stützkörper 8 umgeben, der aus mehreren biegesteifen plattenartigen Ringabschnitten besteht. Dieser ringförmige Stützkörper ist mit Hilfe von Zugbolzen 9 am Haltering 7 fixiert.

Figur 2 zeigt in einer Stirnansicht einen Ausschnitt aus dem aus Blechen aufgebauten Haltering 7, Wickelköpfe 6, Ringabschnitte 81 und 82 des ringförmigen Stützkörpers 8 und Zugbolzen 9. Zur Fixierung der Zugbolzen 9 sind die Bleche des Halteringes 7 mit axial verlaufenden Profilnuten 12 versehen, beispielsweise in Schwalbenschwanzform. In diese Nuten sind Profilleisten 13 eingeschoben, die Bohrungen zum Einschrauben der Zugbolzen 9 enthalten.

Figur 3 zeigt eine zur Figur 2 gehörige Längsschnittsdarstellung. Hier sind zusätzlich Zugbolzen 14 zur axialen Verspannung des Blechpaketes dargestellt. Weiterhin ist die Konstruktion derart gewählt, daß die Bleche für den inneren Haltering 7 unmittelbar an die Bleche des Rotorblechpaketes 3 anschließen. Die Druckplatte 4 erfaßt demzufolge das eigentliche Rotorblechpaket 3 nur im Bereich der eingelegten Wicklungen 5.

## Patentansprüche

1. Dynamoelektrische Maschine, bei der auch der aus Blechen (3) aufgebaute Rotor mit Wicklungen (5) versehen ist und bei der die Wickelköpfe (6) der Rotorwicklungen mittels einer die Wickelköpfe umgebenden Stützeinrichtung (8) gegen Fliehkräfte gesichert sind, wobei die Stützeinrichtung (8) aus mehreren biegesteifen plattenartigen Ringabschnitten (81, 82) besteht, die mit Hilfe von Zugbolzen (9) an einem inneren Haltering (7) fixiert sind,
**dadurch gekennzeichnet,**
daß der innere Haltering (7) aus einem Blechpaket besteht, das auf der axial verlängerten Nabe (2,21) des Rotors in gleicher Weise wie das Rotorblechpaket (3) aufliegt und das mit am Umfang gleichmäßig verteilt angeordneten, axial verlaufenden Profilnuten (12) versehen ist, in die Profilleisten (13) zur Befestigung der Zugbolzen (9) eingeschoben sind.

## Claims

1. Dynamo-electric machine, in which the rotor, which is constructed from laminates (3), is also provided with windings (5) and in which the winding overhangs (6) of the rotor windings are secured against centrifugal forces by means of a supporting device (8) which surrounds the winding overhangs, the supporting device (8) comprising a plurality of inflexible, platelike ring sections (81, 82) which are fixed on an inner retaining ring (7) with the aid of tie bolts (9),
characterized
in that the inner holder (7) comprises a laminate stack which rests on the axially lengthened hub (2,21) of the rotor in the same manner as the laminated rotor core (3) and which is provided with profiled slots (12) which are arranged in a uniformly distributed manner along the circumference and run axially and into which profiled strips (13) are pushed in order to secure the tie bolts (9).

## Revendications

1. Machine dynamo-électrique, dans laquelle le rotor constitué de tôles (3) est muni également de bobines (5) et dans laquelle les têtes (6) des bobines du rotor sont maintenues à l'encontre de la force centrifuge au moyen d'un dispositif (8) d'appui entourant les têtes de bobines, le dispositif (8) d'appui étant constitué de plusieurs tronçons (81, 82) annulaires en forme de plaques résistantes à la flexion et immobilisés à l'aide de tirants (9) sur un anneau (7) intérieur de maintien,
caractérisée
en ce que l'anneau (7) intérieur de maintien est constitué d'un paquet de tôles qui repose sur le moyeu (2, 21), prolongé axialement, du rotor, de la même façon que le paquet (3) de tôles de rotor, et qui est muni de gorges (12) profilées réparties de manière uniforme sur le pourtour et s'étendant axialement dans lesquelles des baguettes (13) profilées sont insérées pour la fixation des tirants (9).
